# EUROPEAN PATENT APPLICATION

(11) **EP 4 318 780 A1**
(43) Date of publication of application: **07.02.2024**
(21) Application number: 21965477.9
(22) Date of filing: 17.12.2021
(51) Int. Cl.: H01M 50/474

(54) **BATTERY CELL AND MANUFACTURING METHOD AND MANUFACTURING EQUIPMENT THEREFOR, BATTERY, AND ELECTRICAL DEVICE**

(30) Priority: 26.11.2021 WO PCT/CN2021/133705
(71) Applicant: Contemporary Amperex Technology Co., Limited, Ningde, Fujian 352100 (CN)
(72) Inventor: XU, Hu, Ningde, Fujian 352100 (CN); HUANG, Siying, Ningde, Fujian 352100 (CN); ZHAO, Fenggang, Ningde, Fujian 352100 (CN); ZHONG, Xueqi, Ningde, Fujian 352100 (CN); LI, Xing, Ningde, Fujian 352100 (CN); NIU, Shaojun, Ningde, Fujian 352100 (CN); ZHU, Wenqi, Ningde, Fujian 352100 (CN)
(74) Representative: Ziebig Hengelhaupt Intellectual Property Attorneys Patentanwaltskanzlei PartGmbB
(86) International application number: PCT/CN2021/139353
(87) International publication number: WO 2023/092757

(57) **Abstract**

The embodiments of the present application provides a battery cell, a method and a device for manufacturing a battery cell, a battery, and an electrical device. The battery cell includes: a housing, an end cap, an electrode terminal, an electrode assembly and an insulating member. The housing has an opening; the end cap is provided for covering the opening; and the electrode terminal is in insulated connection with the end cap. The electrode assembly is housed within the housing and includes a main body, a first tab and a second tab, wherein the first tab and the second tab have different polarities and are disposed on a same end of the main body facing the end cap, one of the first tab and the second tab is provided for electrically connecting the end cap, and the other of the first tab and the second tab is provided for electrically connecting the electrode terminal. The insulating member is at least partially located between the first tab and the second tab, and abutted against the main body along a thickness direction of the end cap. The present application can improve energy density and safety of a battery cell.

## Description

### CROSS-REFERENCE TO RELATED APPLICAIONS

The application claims priority to PCT patent application No. PCT/CN2021/133705, filed on November 26, 2021 and entitled by "BATTERY CELL, BATTERY, ELECTRICAL EQUIPMENT, AND METHOD AND DEVICE FOR MANUFACTURING BATTERY CELL", which is incorporated herein by reference in its entirety.

### TECHNICAL FIELD

The application relates to the field of battery technology, and in particular to a battery cell, a method and a device for manufacturing a battery cell, a battery, and an electrical device.

### BACKGROUND

Energy conservation and emission reduction are key of sustainable development of automotive industry, and electric vehicles have become an important aspect of the sustainable development of the automotive industry due to their advantages in energy conservation and environmental protection. For electric vehicles, battery technology is an important factor related to their development.

In the battery technology, both safety and performance of a battery cell need to be considered. Magnitude of energy density of a battery cell affects performance of the battery cell. Therefore, how to improve energy density of a battery cell is an urgent technical problem in the battery technology.

### SUMMARY

The application provides a battery cell, a method and a device for manufacturing a battery cell, a battery, and an electrical device, which can improve energy density and safety of a battery cell.

In a first aspect, the embodiments of the present application provide a battery cell, including a housing, an end cap, an electrode terminal, an electrode assembly and an insulating member. The housing has an opening, the end cap is provided for covering the opening, and the electrode terminal is in insulated connection with the end cap. The electrode assembly is housed within the housing and includes a main body, a first tab and a second tab, wherein the first tab and the second tab have different polarities and are disposed on a same end of the main body facing the end cap, one of the first tab and the second tab is provided for electrically connecting the end cap, and the other of the first tab and the second tab is provided for electrically connecting the electrode terminal. The insulating member is at least partially located between the first tab and the second tab, and abutted against the main body along a thickness direction of the end cap.

In the solution, the second tab and the first tab are located at a same end of the main body, so as to achieve tabs outgoing from the same end of the main body, which saves an internal space of the battery cell, such that the housing can provide a larger space for the main body, and thus is conducive to improve energy density of the battery cell. The insulating member is at least partially located between the first tab and the second tab, and plays a role of separating the first tab and the second tab, which reduces risks of short-circuit caused by contact between the first tab and the second tab, thereby improving safety of the battery cell. The insulating member is abutted against the main body along the thickness direction of the end cap, which reduce a space for the main body being moved in the housing 1, so as to limit movement of the main body in the housing along the thickness direction, and thus reduces risks of tearing of the first tab and the second tab when the battery cell is shaken.

In some embodiments, the insulating member is partially clamped between the electrode terminal and the end cap.

In the solution, at least a part of the insulating member is clamped between the electrode terminal and the end cap, so as to achieve fixture of the insulating member, which reduces movement of the insulating member in the housing, so that the insulating member can effectively restrict shaking of the main body.

In some embodiments, the insulating member includes a first insulating part, which is at least partially located between the first tab and the second tab to separate the first tab from the second tab. Along the thickness direction of the end cap, the first insulating part is abutted against the main body and the end cap.

In the solution, the end cap restricts movement of the main body along the thickness direction through the first insulating part. The first insulating part not only plays a role of separating the first tab and second tab, but also has a good limiting effect on the main body, so as to restrict movement of the main body in the housing along the thickness direction of the end cap, which further reduces risks of failure of the first tab and failure of the second tab.

In some embodiments, the first insulating part is a ring structure extending along a circumference of the electrode terminal.

In the solution, the first insulating part being a ring structure can isolate the first tab and second tab as much as possible, thereby improving safety.

In some embodiments, the insulating member further includes a second insulating part, which is at least partially located between the electrode terminal and the end cap to insulate the electrode terminal from the end cap.

In the solution, the insulating member not only achieves insulation between the first tab and second tab, but also achieves insulation between the electrode terminal and the end cap.

In some embodiments, the first insulating part and the second insulating part are formed as an integrally formed structure.

In the solution, the insulation member has good integrity and thus is easy to install. Since the electrode terminal and the end cap are in insulated connection through the second insulating part, the second insulating part is jointly limited by the electrode terminal and the end cap, and in this case, the first insulating part is not easily displaced within the housing, so that the first insulating part always remains in a position that separates the first tab and the second tab.

In some embodiments, the insulating member is abutted against the main body such that a concave structure is formed in a surface of the main body facing the end cap.

In the solution, an isolation film of the main body deforms and forms a concave structure under pressure from the insulating member. With formation of the concave structure, a compressed area of the isolation film becomes tight, such that a distance between the insulating member and electrode pieces become closer, which reduces a degree of further compression of the isolation film under pressure from the insulating member when the battery cell vibrates, thereby reducing an amplitude of vibration of the electrode assembly.

In some embodiments, the concave structure has a depth of 0.01mm to 5mm.

The greater the depth of the concave structure, the smaller the distance between the insulating member and the electrode pieces, the smaller the buffering effect of the isolation film when the battery cell vibrates, the greater the force on the electrode pieces, resulting in higher risks of active materials on the electrode pieces falling off; the smaller the depth of the concave structure, the greater the degree to which the isolation film can be compressed during vibration of the battery cell, the greater the amplitude of vibration of the main body, resulting in higher risks of tearing of tabs. In the solution, limiting the depth of the concave structure to 0.01mm-5mm can effectively balance pressure on the electrode pieces and the amplitude of vibration of the main body, thereby improving usability and safety of the electrode assembly.

In some embodiments, in a radial direction of the main body, a maximum distance from part of the insulating member which is located between the first tab and the second tab to the first tab is less than or equal to 5mm.

During assembly and usage of the battery cell, the first tab may deform when compressed, leading to risks of the first tab being inserted into the main body. In the solution, the distance from the part of the insulating member which is located between the first tab and second tab to the first tab is relatively small, so the insulating member can effectively support the first tab, which reduces a degree of deformation of the first tab, and reduces risks of the first tab being inserted into the main body, thereby improve safety.

In some embodiments, a part of the insulating member which is located between the first tab and second tab is abutted against the first tab to support the first tab.

In the solution, the insulating member is abutted against the first tab to effectively support the first tab, which reduces a degree of deformation of the first tab, and reduces risks of the first tab being inserted into the main body, thereby improve safety.

In some embodiments, the housing may include a housing body and a support part protruding from an inner surface of the housing body, wherein the support part is provided at a side of the end cap facing the electrode assembly and for supporting the end cap. In the thickness direction of the end cap, the support part is spaced apart from the main body, and the support part does not overlap with the first tab.

In the solution, the support part can limit the end cap in the thickness direction to avoid excessive insertion of the end cap into the housing. The support part does not overlap with the first tab in the thickness direction, which can avoid interference between the support part and the first tab, prevents the support part from squeezing the first tab, thereby reducing deformation of the first tab.

In some embodiments, in a radial direction of the main body, a minimum distance between the first tab and a top end of the support part is greater than or equal to 0.1mm.

The solution can reduce risks of contact between the first tab and the support part due to assembly errors.

In some embodiments, the main body is a wound structure, and the main body has a central hole at a center of the wound structure. In a radial direction of the main body, a minimum distance between the second tab and the center hole is greater than or equal to 0.1mm.

In the solution, the central hole can serve as a channel for flowing of electrolyte, which can improve wettability of the electrode assembly; when gas is generated inside the battery cell due to thermal runaway, the central hole can also serve as a channel for flowing of the gas, allowing the gas to be quickly discharged through a pressure relief mechanism of the battery cell, which reduces safety risks. The embodiment can ensure a minimum distance between the second tab and the center hole, which can reduce risks of the second tab obstructing the center hole due to deformation.

In some embodiments, both the first tab and second tab are ring structures, and the first tab surrounds an outer side of the second tab.

In the solution, the first tab is a ring structure, which facilitates formation of the first tab and facilitates realization of large overcurrent area between the first tab and the end cap. The second tab is a ring structure, which facilitates formation of the second tab and facilitates realization of large overcurrent area between the second tab and the end cap.

In some embodiments, the first tab is provided for electrically connecting the end cap, and the second tab is provided for electrically connecting with the electrode terminal.

In some embodiments, the first tab is directly connected to the end cap to achieve electrical connection between the first tab and the end cap.

In the solution, the end cap is directly connected to the first tab, so there is no need to provide a current collecting component between the end cap and the first tab to achieve the electrical connection, which can free up more space for the main body.

In some embodiments, the first tab is welded to the end cap. The end cap is welded to the first tab such that there is stable connection between the end cap and the first tab, which ensures stable overcurrent between the end cap and the first tab.

In some embodiments, the battery cell is a cylinder battery cell.

In a second aspect, the embodiments of the present application provide a battery, including a plurality of battery cells according to any one of the embodiments in the first aspect.

In a third aspect, the embodiments of the present application provide an electrical device, including the battery according to the second aspect, wherein the battery is provided for providing electrical energies.

In a fourth aspect, the embodiments of the present application provide a method for manufacturing a battery cell, including: providing an electrode assembly, the electrode assembly comprising a main body, a first tab and a second tab, wherein the first tab and the second tab have different polarities and are disposed on a same end of the main body; providing a housing with an opening; installing the electrode assembly into the housing; providing an end cap, an electrode terminal and an insulating member, wherein the electrode terminal is in insulated connection with the end cap, and the insulating member is disposed on the end cap; and covering the opening with the end cap, electrically connecting one of the first tab and the second tab to the end cap, and electrically connecting one of the first tab and the second tab to the electrode terminal, wherein the first tab and the second tab are disposed on the same end of the main body facing the end cap, and the insulating member is at least partially located between the first tab and the second tab, and abutted against the main body along a thickness direction of the end cap .

In a fifth aspect, the embodiments of the present application provide a device for manufacturing a battery cell, including: a first provision device for providing an electrode assembly, the electrode assembly comprising a main body, a first tab and a second tab, wherein the first tab and the second tab have different polarities and are disposed on a same end of the main body; a second provision device for providing a housing with an opening; a first installation device for installing the electrode assembly into the housing; a third provision device for providing an end cap, an electrode terminal and an insulating member, wherein the electrode terminal is in insulated connection with the end cap, and the insulating member is disposed on the end cap; and a second installation device for covering the opening with the end cap, and electrically connecting one of the first tab and the second tab to the end cap, and electrically connecting the other of the first tab and the second tab to the electrode terminal, wherein the first tab and the second tab are disposed on the same end of the main body facing the end cap, and the insulating member is at least partially located between the first tab and the second tab, and abutted against the main body along a thickness direction of the end cap.

### BRIEF DESCRIPTION OF THE DRAWINGS

In order to provide clear description of technical solutions of the embodiments of the present application, accompanying drawings required in the embodiments will be briefly descried. It should be understood that the following drawings only illustrate certain embodiments of the present application, and therefore should not be regarded as limitation to the scope. For those skilled in the art, other relevant drawings can also be obtained based on these drawings without inventive efforts.
Fig. 1 is a schematic structural diagram of a vehicle according to some embodiments of the present application;
Fig. 2 is a schematic structural diagram of a battery according to some embodiments of the present application;
Fig. 3 is an exploded view of a battery cell according to some embodiments of the present application;
Fig. 4 is a cross-sectional view of the battery cell shown in Fig. 3;
Fig. 5 is a partial view of the battery cell shown in Fig. 4;
Fig. 6 is a partial enlarged view of a part of the battery cell shown in Fig. 4, as indicated with A;
Fig. 7 is a cross-sectional schematic diagram of a battery cell according to some other embodiments of the present application;
Fig. 8 is an enlarged schematic diagram of a part of the battery cell shown in Fig. 7, as indicated by a circle B;
Fig. 9 is a flowchart illustrating a method for manufacturing a battery cell according to some embodiments of the present application;
Fig. 10 is a schematic block diagram of a device for manufacturing a battery cell according to some embodiments of the present application.

Reference numerals used in the detailed description are provided as follows:

10-box; 11-first part; 12-secnd part; 20- battery cell; 21-housing; 21a-housing body; 21b-support part; 21c-third concave part; 21d-flanging part; 22-electrode assembly; 221-main body; 2211-concave structure; 2212-center hole; 222-first tab; 223-scond tab; 23-end cap; 231-inner surface; 232-stop part; 233-second concave part; 234-second connecting part; 24-electrode terminal; 241-first concave part; 2411-bottom surface; 242-first connecting part; 243-abutting surface; 244-liquid injection hole; 245-terminal body; 246-first limiting part; 247-second limiting part; 25-insulating member; 251-first insulating part; 2511-first side; 2512-second side; 252-second insulating part; 100-battery; 200-controller; 300-motor; 1000-vehicle; 2000- manufacturing equipment; 2100- first provision device; 2200-second provision device; 2300- first installation device; 2400-third provision device; 2500-second installation device; and Z-thickness direction.

### DETAILED DESCRIPTION

In order to make purposes, technical solutions, and advantages of the embodiments of the present application clearer, the technical solutions in the embodiments of the present application will be clearly described in conjunction with accompanying drawings. Obviously, the described embodiments are only a part of the embodiments of the present application, not all of the embodiments. Based on the embodiments in the present application, all other embodiments obtained by those skilled in the art without inventive efforts also fall within a protection scope of the present application.

Unless otherwise defined, all technical and scientific terms used in the present application have the same meanings as those commonly understood by those skilled in the art; the terms used in the specification of the present application are described only for the purpose of describing specific embodiments and are not intended to limit the present application; the terms "including" and "comprising" in the description and claims as well as the accompanying drawings of the present application and any variations thereof are intended to cover non-exclusive inclusion. The terms "first", "second", etc. in the description and claims as well as the accompanying drawings of the present application are intended to distinguish different objects, rather than to describe specific sequence or primary and secondary relationship.

The reference to "embodiment" in the present application means that specific features, structures, or characteristics described in conjunction with the embodiment can be included in at least one of the embodiments of the present application. The phrase mentioned in various positions in the description does not necessarily refer to a same embodiment, and does not refer to an independent or alternative embodiment that is mutually exclusive with other embodiments.

In the description of the present application, it should be noted that unless otherwise specified and limited, the terms "installation", "connection", "connecting", and "attachment" should be broadly understood, for example, they may refer to a fixed connection, a detachable connection, or an integrated connection; they may refer to a direct connection, an indirect connection through an intermediate medium, or a connection between interiors of two elements. For those skilled in the art, specific meanings of the above terms in the present application can be understood according to specific circumstances.

The term "and/or" in the present application is provided only for describing an association relationship of associated objects, indicating three types of relationships. For example, "A and/or B" may indicate existence of A alone, existence of A and B simultaneously, and existence of B alone. In addition, the character "/" in the present application generally indicates that the associated objects is in an "or" relationship.

In the embodiments of the present application, same components are denoted by a same reference numeral, and for simplicity, detailed descriptions for the same components may be omitted in different embodiments. It should be understood that thickness, length, width, and other dimensions of various components as well as overall thickness, length, width, and other dimensions of an integrated device in the embodiments of the present application as shown in the accompanying drawings are only illustrative examples and do not constitute any limitations of the present application.

The term "a plurality of" in the present application refers to two or more (including two).

In the present application, a battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell, and the embodiments of the present application are not limited in this respect. The battery cell may be cylindrical, flat, cuboid, or other shapes and the embodiments of the present application are not limited in this respect. Generally, according to package, there are three types of battery cells: a cylindrical battery cell, a prismatic battery cell, and a pouch battery cell, and the embodiments of the present application are not limited in this respect.

The battery mentioned in the embodiments of the present application refers to a single physical module that includes one or more battery cells to provide a higher voltage and capacity. For example, the battery mentioned in the present application may include a battery module or a battery pack, etc. Generally, the battery include a box for packaging one or more battery cells. The box can prevent liquids or other foreign objects from affecting charging or discharging of the battery cells.

The battery cell includes an electrode assembly and electrolyte, and the electrode assembly includes a positive electrode piece, a negative electrode piece, and an isolation film. The battery cell mainly relies on metal ions moving between the positive electrode piece and negative electrode piece to function. The positive electrode piece includes a positive current collector and a positive active material layer. The positive active material layer is coated on a surface of the positive current collector, and a part of the positive current collector without the positive active material layer protrudes from a part of the positive current collector with the positive active material layer, and the part of the positive current collector without the positive active material layer is used as a positive tab. Taking a lithium-ion battery cell as an example, the positive current collector may be made of aluminum, and the positive active material may be lithium cobalt oxide, lithium iron phosphate, ternary lithium or lithium manganese oxide. The negative electrode piece includes a negative current collector and a negative active material layer. The negative active material layer is coated on a surface of the negative current collector, a part of the negative current collector without the negative active material layer protrudes from a part of the negative current collector with the negative active material layer, and the part of the negative current collector without the negative active material layer is used as a negative tab. The negative current collector may be made of copper, and the negative active material may be carbon or silicon. The isolation film may be made of PP (polypropylene) or PE (polyethylene), etc. In addition, the electrode assembly may be a wound structure or a laminated structure, and the embodiments of the application are not limited in this respect.

In the battery cell, the battery cell generally includes a housing, an electrode assembly and an end cap. The electrode assembly is located in the housing, and the housing is covered by the end cap to provide an enclosed space for the electrode assembly and electrolyte. The battery cell generates electric energies by moving metal ions (such as lithium ions) between the positive electrode piece and the negative electrode piece of the electrode assembly.

The battery cell generally has two output poles with opposite polarities to output the electrical energies of the battery cell. At present, the housing and an electrode terminal disposed on the end cap serve as the two output poles of the battery cell, and the two tabs of the electrode assembly which have opposite polarities are electrically connected to the housing and the electrode terminal respectively. The inventors found that the two tabs with opposite polarities of the electrode assembly are located at both ends of the main body of the electrode assembly, one of the tabs is electrically connected to the electrode terminal, and the other of the tabs is electrically connected to one side of the housing away from the end cap, and both tabs occupy a portion of an interior space of the housing, which reduces a space provided by the housing for the main body of the electrode assembly, resulting in a decrease in energy density of the battery cell.

The inventors attempted to provide the two tabs of the electrode assembly at a same end of the electrode assembly so as to save an internal space of the battery cell, and in this way, the housing can provide more space for the main body of the electrode assembly, which is beneficial for improving the energy density of the battery cell.

In order to ensure overcurrent capacity, the two tabs of the electrode assembly should have sufficient overcurrent areas. Due to a limited size of the electrode assembly, if the two tabs are led out from the same end of the electrode assembly, a spacing between the two tabs would be small in order to ensure the overcurrent areas of the respective tabs. When the battery cell is subjected to vibration and impact, the two tabs may deform and overlap, causing a short circuit and posing a safety risk.

In view of this, the embodiments of the present application provides a technical solution, in which the battery cell includes a housing, an end cap, an electrode terminal, an electrode assembly, and an insulating member. The housing has an opening, the end cap is provided for covering the opening, and the electrode terminal is in insulated connection with the end cap. The electrode assembly is housed within the housing and includes a main body, a first tab, and a second tab, wherein the first tab and the second tab have opposite polarities and are located at a same side of the main body facing the end cap, one of the first tab and the second tab is electrically connected with the end cap, and the other of the first tab and the second tab is electrically connected with the electrode terminal. The insulating member is at least partially located between the first tab and the second tab and is abutted against the main body along a thickness direction of the end cap. In the present technical solution, the insulating member can separate the first tab from the second tab, which reduces risks of short circuit caused by contact between the first tab and the second tab, and thereby improving safety of the battery cell. The insulating member is abutted against the main body along the thickness direction of the end cap, and thus plays a role of limiting the main body, so as to limit movement of the main body within the housing along the thickness direction of the end cap, which reduces risks of tearing of the first tab and the second tab during vibration of the battery cell.

The technical solution described in the embodiments of the present application is applicable to a battery and an electrical device using a battery.

The electrical device may be a vehicle, a mobile phone, a portable device, a laptop, a ships, a spacecraft, an electric toy, an electric tool, and so on. The vehicle may be a fuel powered vehicle, a gas powered vehicle, or a new-energy powered vehicle. The new-energy powered vehicle may be a pure electric vehicle, a hybrid electric vehicle, or a range extended electric vehicle, etc.; the spacecraft may include an airplane, a rocket, a space shuttle, and a spaceship, etc.; the electric toy may include a fixed or mobile electric toy, such as a game machine, an electric car toy, an electric boat toy, an electric aircraft toy, etc.; the electric tool may include an electric metal cutting tool, an electric grinding tool, an electric assembly tool, and an electric tool for railway usage, such as an electric drill, an electric grinder, an electric wrench, an electric screwdriver, an electric hammer, an impact drill, a concrete vibrator, and an electric planer. The embodiments of the present application does not impose special restrictions on the above-mentioned electrical device.

For convenience of description, the embodiments are described below by taking an electrical device being a vehicle as an example.

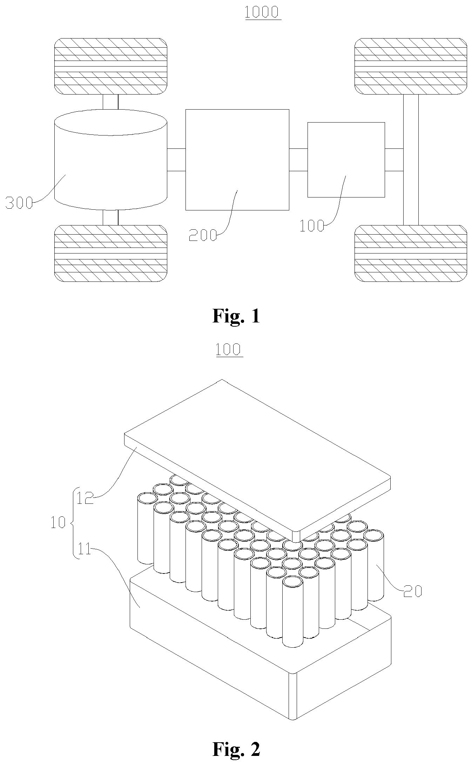

Fig. 1 is a structural schematic diagram of a vehicle 1000 according to some embodiments of the present application. Please refer to Fig. 1, an interior of the vehicle 1000 is equipped with a battery 100, which may be installed at the bottom, head, or tail of the vehicle 1000. The battery 100 is provided for supplying power for the vehicle 1000, for example, the battery 100 may serve as an operating power source of the vehicle 1000.

The vehicle 1000 may also include a controller 200 and a motor 300. The controller 200 is provided for controlling the battery 100 to supply power to the motor 300, so as to meet operation power demands of the vehicle 1000 for starting, navigation and driving, for example.

In some embodiments of the present application, the battery 100 may not only serve as the operating power source for the vehicle 1000, but also as a driving power source for the vehicle 1000, in order to replace or partially replace fuel or natural gas to provide driving power for the vehicle 1000.

Fig. 2 is a structural schematic diagram of a battery 100 according to some embodiments of the present application. Please refer to Fig. 2, the battery 100 includes a box 10 and a battery cell 20, and the box 10 is provided for accommodating the battery cell 20.

The box 10 is a component for accommodating the battery cell 20. The box 10 provides a space for accommodating the battery cell 20, and the box 10 may adopt various structures. In some embodiments, the box 10 may include a first part 11 and a second part 12, which, when put together, define the space for accommodating the battery cell 20. The first part 11 and the second part 12 may have various shapes, such as cuboid, cylinder, etc. The first part 11 may be a hollow structure with one side being open, the second part 12 may also be a hollow structure with one side being open, and when the open side of the second part 12 is put on the open side of the first part 11, the box 10 with an accommodation space is formed. Alternatively, the first part 11 may be a hollow structure with one side being open, the second part 12 may be a platelike structure, and when the second part 12 is put on the open side of the first part 11, the box 10 with an accommodation space is formed. The first part 11 and the second part 12 may be sealed through a sealing element, and the sealing element may be a sealing ring, sealant, etc.

In the battery 100, there may be one or more battery cells 20. In a case where there are a plurality of battery cells 20, the plurality of battery cells 20 may be connected in series, parallel, or hybrid. Hybrid connection refers to both series and parallel connections among the plurality of battery cells 20. Some battery cells 20 may first be connected in series, parallel, or hybrid to form a battery module, and a plurality of such battery modules may then be connected in series, parallel, or hybrid to form an entirety to be accommodated in the box 10. Alternatively, all the battery cells 20 may be directly connected in series, parallel, or hybrid together, and then an entirety of the battery cells 20 will be accommodated in the box 10.

In some embodiments, the battery 100 may further include a busbar component, through which the plurality of battery cells 20 can be electrically connected so as to achieve series, parallel, or hybrid connections of the plurality of battery cells 20. The busbar component may be a metal conductor, such as copper, iron, aluminum, stainless steel, aluminum alloy, etc.

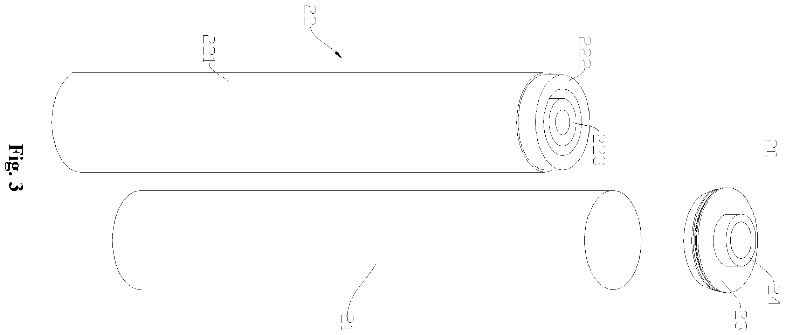

Fig. 3 is an exploded view of a battery cell 20 according to some embodiments of the present application. Please refer to Fig. 3, the battery cell 20 includes a housing 21, an electrode assembly 22, an end cap 23, and an electrode terminal 24.

The housing 21 is a component for accommodating the electrode assembly 22. The housing 21 may be a hollow structure with one end being open, and alternatively, the housing 21 may be a hollow structure with both ends being open. The housing 21 may be made of a variety of materials, such as copper, iron, aluminum, steel, aluminum alloy, etc. The housing 21 may be of a variety of shapes, such as cylinder, cuboid, etc. As an example, in Fig. 3, the housing 21 is a cylinder.

The electrode assembly 22 is a component in the battery cell 20 that undergoes electrochemical reactions. The electrode assembly 22 may include a main body 221, a first tab 222 and a second tab 223, wherein the first tab 222 and the second tab 223 have opposite polarities. Both the first tab 222 and the second tab 223 protrude from the main body 221, and the first tab 222 and the second tab 223 are disposed on a same end of the main body 221. One of the first tab 222 and the second tab 223 is a positive tab and the other of the first tab 222 and the second tab 223 is a negative tab. The main body 221 may include a part of a positive electrode piece, which is coated with an active material layer, a part of a negative electrode piece, which is coated with an active material layer, and an isolation film. The electrode assembly 22 may be a wound structure formed by winding the positive electrode piece, the isolation film, and the negative electrode piece. Alternatively, the electrode assembly 22 may be a laminated structure formed by stacking the positive electrode piece, the isolation film, and the negative electrode piece. The main body 221 may be a part of the electrode assembly 22 corresponding to an area where the electrode pieces are coated with the active material layer, the positive tab may be a part of the positive electrode piece which is not coated with the active material layer, and the negative tab may be a part of the negative electrode piece which is not coated with the active material layer.

The end cap 23 is a component for covering the opening of the housing 21 to isolate an internal environment of the battery cell 20 from an external environment. When the end cap 23 is covering the opening of the housing 21, the end cap 23 together with the housing 21 defines an enclosed space for accommodating the electrode assembly 22 and electrolyte. The end cap 23 may be in a sealing connection with the housing 21 through a sealing element. The end cap 23 may have a shape adapted to a shape of the housing 21. As an example, the housing 21 may be a cuboid structure, and the end cap 23 may be a rectangular plate structure for adapting to the housing 21, and as another example, the housing 21 may be a cylinder structure, and the end cap 23 may be a circular plate structure for adapting to the housing 21. The end cap 23 may be made of a variety of materials, and exemplarily, the end cap 23 may be made of a metal material, such as copper, iron, aluminum, steel, aluminum alloy, etc.

In the battery cell 20, there may be one or two end caps 23. In a case where the housing 21 is a hollow structure with one end being open, one end cap 23 is provided accordingly; and in a case where the housing 21 is a hollow structure with both ends being open, two end caps 23 are provided correspondingly, and the two end caps 23 cover the two openings of the housing 21 respectively.

The electrode terminal 24 is a component of the battery cell 20 for connecting an external component (such as a busbar component) so as to output electrical energies. In the embodiment where the first tab 222 and the second tab 223 are disposed on a same end of the main body 221, the end cap 23 may be electrically connected to the first tab 222 while the electrode terminal 24 disposed on the end cap 23 may be electrically connected to the second tab 223, or the end cap 23 may be electrically connected to the second tab 223 while the electrode terminal 24 disposed on the end cap 23 may be electrically connected to the first tab 222, such that the end cap 23 and the electrode terminal 24 which are located at a same side of the housing 21 serve as output poles of the battery cell 20 with opposite polarities. In this case, the end cap 23 may be in insulated connection with the electrode terminal 24, which reduces risks of the positive and negative poles being short-circuited. It should be noted that in the embodiment where there are two end caps 23 in the battery cell 20, one of the end caps 23 may be equipped with the electrode terminal 24, while the other of the end caps 23 may not equipped with the electrode terminal 24.

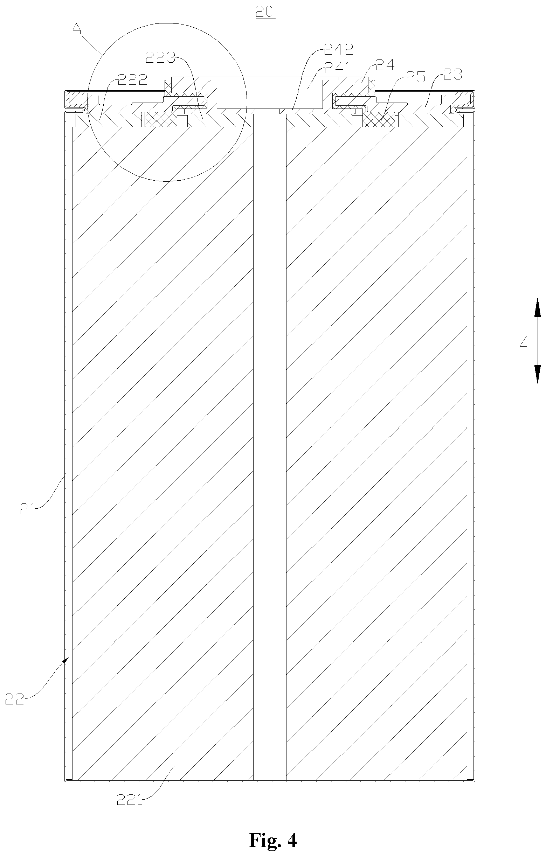

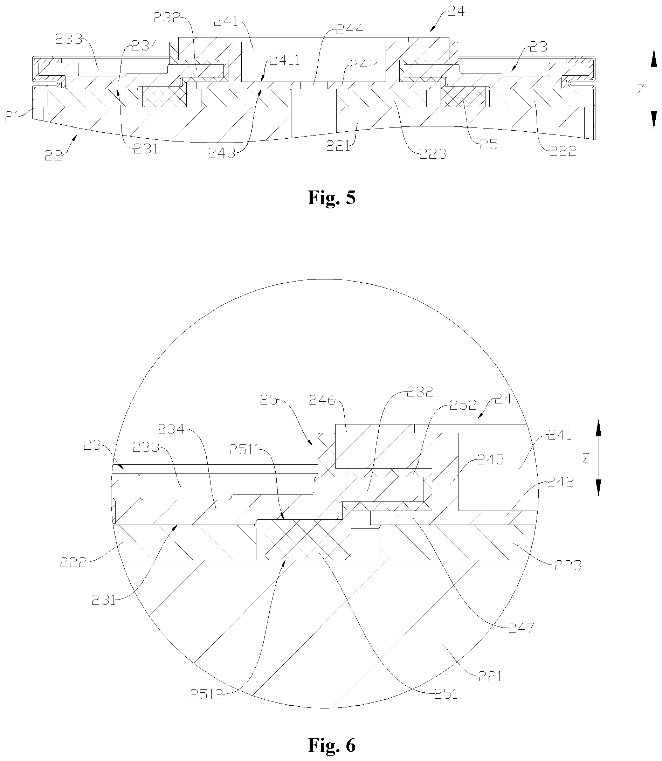

Fig. 4 is a cross-sectional view of the battery cell 20 shown in Fig. 3; Fig. 5 is a partial view of the battery cell 20 shown in Fig. 4; and Fig. 6 is a partial enlarged view of a part of the battery cell shown in Fig. 4, as indicated by A.

As shown in Figs. 4 to 6, the embodiments of the present application provide a battery cell 20, including a housing 21, an end cap 23, an electrode terminal 24, an electrode assembly 22, and an insulating member 25. The housing 21 has an opening. The end cap 23 is provided for covering the opening. The electrode terminal 24 is in insulated connection with the end cap 23. The electrode assembly 22 is accommodated within the housing 21 and includes a main body 221, a first tab 222, and a second tab 223. The first tab 222 and the second tab 223 have opposite polarities and are located at a same end of the main body 221 facing the end cap 23. One of the first tab 222 and the second tab 223 is provided for electrically connecting to the end cap 23, and the other of the first tab 222 and the second tab 223 is provided for electrically connecting the electrode terminal 24. The insulating member 25 is at least partially located between the first tab 222 and the second tab 223, and is abutted against the main body 221 along a thickness direction Z of the end cap 23.

The first tab 222 and the second tab 223 have opposite polarities. The first tab 222 may be a positive tab, and the second tab 223 may be a negative tab. Alternatively, the first tab 222 may be a negative tab, and the second tab 223 may be a positive tab. In the thickness direction Z of the end cap 23, the first tab 222 and the second tab 223 protrude from the same end of the main body 221. The first tab 222 and the second tab 223 may be closed structures extending along a circumference of the housing 21, and it may be that the first tab 222 is located surrounding a circumference of the second tab 223, or it may be that the second tab 223 is located surrounding a circumference of the first tab 222. For example, both the first tab 222 and the second tab 223 may be ring structures, and the first tab 222 may be located surrounding a circumference of the second tab 223, so that the first tab 222 and the second tab 223 are arranged in a larger ring and a smaller ring. Of course, the first tab 222 and the second tab 223 may be strip-like structures, and in the case, the first tab 222 and the second tab 223 may be disposed on the same end of the main body 221 and spaced apart with each other.

The insulated connection between the electrode terminal 24 and the end cap 23 refers to that the electrode terminal 24 and the end cap 23 are insulated from each other after connection, making it impossible for charges to move from one of them to the other of them.

In the embodiments of the present application, it may be that the first tab 222 is electrically connected to the end cap 23, while the second tab 223 is electrically connected to the electrode terminal 24, or it may be that the second tab 223 is electrically connected to the end cap 23, while the first tab 222 is electrically connected to the electrode terminal 24. For ease of description below, the first tab 222 is electrically connected to the end cap 23, while the second tab 223 is electrically connected to the electrode terminal 24.

The electrical connection between the end cap 23 and the first tab 222 refers to a connection state between the end cap 23 and the first tab 222 where charges can move from one of them to the other of them. The end cap 23 and the first tab 222 may be directly connected to achieve the electrical connection with each other, for example, the end cap 23 and the first tab 222 may be abutted welded, etc.; the end cap 23 and the first tab 222 may be indirectly connected to achieve the electrical connection with each other, for example, the end cap 23 and the first tab 222 may be connected through a current collector or conductive adhesive. The electrical connection between the electrode terminal 24 and the second tab 223 refers to a connection state between the electrode terminal 24 and the second tab 223 where charges can move from one of them to the other of them. The electrode terminal 24 may be directly connected to the second tab 223, and for example, the electrode terminal 24 and the second tab 223 may be abutted, welded, etc. The electrode terminal 24 and the second tab 223 may be indirectly connected, for example, the electrode terminal 24 and the second tab 223 may be connected through a current collector or conductive adhesive. The current collector mentioned here is a conductor with conductivity, which may be a disc-shaped current collection disk or a sheet-shaped adapter.

Exemplarily, the housing 21 may be a cylinder structure with one end being open, the end cap 23 may be a ring structure, and the electrode terminal 24 may be disposed at a center of the end cap 23.

The insulating member 25 is a component that separates the first tab 222 and the second tab 223, and the insulating member 25 insulates the first tab 222 from the second tab 223. The insulating member 25 may be made of a variety of materials, such as rubber, plastic, etc. The insulating member 25 is at least partially located between the first tab 222 and the second tab 223. It should be understood that the insulating member 25 may be entirely located between the first tab 222 and the second tab 223, or only a part of the insulating member 25 is located between the first tab 222 and the second tab 223.

In the embodiments of the present application, the second tab 223 and the first tab 222 are located at a same end of the main body 221, as so to achieve tabs outgoing from the same end of the main body 221, which saves an internal space of the battery cell 20, such that the housing 21 can provide a larger space for the main body 221, and thus is conducive to improve energy density of the battery cell 20. The insulating member 25 is at least partially located between the first tab 222 and the second tab 223, and plays a role of separating the first tab 222 and the second tab 223, which reduces risks of short-circuit caused by contact between the first tab 222 and the second tab 223, thereby improving safety of the battery cell 20. The insulating member 25 is abutted against the main body 221 along the thickness direction Z of the end cap 23, which reduces a space for the main body 221 being moved in the housing 21, so as to limit movement of the main body 211 in the housing 21 along the thickness direction Z, and thus reduces risks of tearing of the first tab 222 and the second tab 223 during vibration of the battery cell 20, risks of failure of electrical connection between the end cap 23 and the first tab 222, and risks of failure of electrical connection between the electrode terminal 24 and the second tab 223.

The insulating member 25 is at least partially located between the first tab 222 and the second tab 223, so the first tab 222 and the second tab 223 are supported by the insulating member 25 when the battery cell 20 is vibrated, which limits deformation of the first tab 222 towards the second tab 223 and deformation of the second tab 223 towards the first tab 222.

In some embodiments, the battery cell 20 may be a cylinder battery cell. Correspondingly, the main body 221 of the electrode assembly 22 may be a cylinder structure.

In some embodiments, both the first tab 222 and the second tab 223 may be ring structures, and the first tab 222 may be located surrounding a circumference of the second tab 223.

The first tab 222 is located surrounding the circumference of the second tab 223, and an inner surface of the first tab 222 and an outer surface of the second tab 223 are spaced apart.

The first tab 222 is located surrounding the circumference of the second tab 223, that is, in a direction perpendicular to the thickness direction Z of the end cap 23, the first tab 222 is closer to a side wall of the housing 21 (shown in Fig. 5) than the second tab 223. The side wall of the housing 21 refers to a wall of the housing 21 which is parallel to the thickness direction Z of the end cap 23. The inner surface of the first tab 222 refers to an inner surface of the first tab 222 which is parallel to the thickness direction Z of the end cap 23, while the outer surface of the second tab 223 refers to an outer surface of the second tab 223 which is parallel to the thickness direction Z of the end cap 23. The inner surface of the first tab 222 and the outer surface of the second tab 223 being spaced apart refers to that there is a gap between the inner surface of the first tab 222 and the outer surface of the second tab 223. In the embodiments where the first tab 222 and the second tab 223 are insulated through the insulating member 25, at least a part of the insulating member 25 is arranged within the gap between the first tab 222 and the second tab 223 to separate the first tab 222 from the second tab 223.

The first tab 222 and the second tab 223 may be both closed structures that extend along a circumference of the electrode terminal 24 and have both ends connected, such as circular ring structures, square ring structures, etc.

Since the first tab 222 is located surrounding the circumference of the second tab 223, the first tab 222 is connected to the end cap 23, and the electrode terminal 24 is connected to the second tab 223, the electrode terminal 24 can be disposed at a center of the end cap 23, facilitating connection of the electrode terminal 24 with an external component (such as a busbar component).

In the case where both the first tab 222 and the second tab 223 are ring structures, the first tab 222 and the second tab 223 may be arranged coaxially. In the case where the first tab 222 is located surrounding the circumference of the second tab 223, the first tab 222 forms an outer annular tab, and the second tab 223 forms an inner annular tab.

The first tab 222 is a ring structure, which facilitates formation of the first tab 222 and facilitates realization of a large area of overcurrent between the first tab 222 and the end cap 23. The second tab 223 is a ring structure, which facilitates formation of the second tab 223 and facilitates realization of a large area of overcurrent between the second tab 223 and the electrode terminal 24.

In some embodiments, the first tab 222 is directly connected to the end cap 23 to achieve electrical connection between the first tab 222 and the end cap 23.

In the embodiment, the end cap 23 is directly connected to the first tab 222, so electrical connection between the end cap 23 and the first tab 222 can be achieved without a current collector, which makes more space for the main body 221.

In some embodiments, the first tab 222 is welded to the end cap 23.

In the embodiment, the end cap 23 is welded with the first tab 222, ensuring a stable connection between the end cap 23 and the first tab 222, and ensuring stable overcurrent between the end cap 23 and the first tab 222.

Exemplarily, the end cap 23 may be welded with the first tab 222 through penetration welding.

In some embodiments, the insulating member 25 is partially clamped between the electrode terminal 24 and the end cap 23.

In the embodiment, at least a part of the insulating member 25 is calmed between the electrode terminal 24 and the end cap 23 to achieve fixation of the insulating member 25, which reduces shaking of the insulating member 25 within the housing 21, and in turn effectively limiting shaking of the main body 211 through the insulating member 25.

In some embodiments, the insulating member 25 includes a first insulating part 251, which is at least partially located between the first tab 222 and the second tab 223 to separate the first tab 222 from the second tab 223. In the thickness direction Z of the end cap, the first insulating part 251 is abutted against the main body 221 and the end cap 23.

The first insulating part 251 is a part of the insulating member 25 that separates the first tab 222 from the second tab 223. The first tab 222 is insulated from the first tab 222 through the first insulating part 251.

The first insulating part 251 is in contact with both the end cap 23 and the main body 221, so that the first insulating part 251 is supported between the end cap 23 and the main body 221 in the thickness direction Z of the end cap 23. Exemplarily, the first insulating part 251 includes a first side 2511 and second side 2512 which are opposite with each other in the thickness direction Z of the end cap 23, wherein the first side 2511 and second side 2512 are respectively abutted against the end cap 23 and the main body 221.

In the embodiment, the end cap 23 restricts movement of the main body 221 in the thickness direction Z through the first insulating part 251. The first insulating part 251 not only plays a role of separating the first tab 222 and the second tab 223, but also plays a role of limiting the main body to effectively limits movement of the main body 221 within the housing 21 in the thickness direction Z of the end cap 23, which further reduces risks of failure of electrical connection between the end cap 23 and the first tab 222, as well as risk of failure of electrical connection between the electrode terminal 24 and the second tab 223.

Exemplarily, the first insulating part 251 of the insulating member 25 is partially disposed between the first tab 222 and the second tab 223.

In some embodiments, the first insulating part 251 is a ring structure extending along a circumference of the electrode terminal 24.

In the embodiment, the annular first insulating part 251 can insulating the first tab 222 and the second tab 223 as much as possible, thereby improving safety.

Exemplarily, the second tab 223 is located within an area enclosed by the first insulating part 251.

In some embodiments, the insulating member 25 may further includes a second insulating part 252, which is at least partially located between the electrode terminal 24 and the end cap 23 to insulate the electrode terminal 24 from the end cap 23.

The second insulating part 252 is at least partially located between the electrode terminal 24 and the end cap 23 to separate the electrode terminal 24 and the end cap 23, so as to achieve insulated connection between the electrode terminal 24 and the end cap 23.

The second insulating part 252 is a part of the insulating member 25 that separates the electrode terminal 24 and the end cap 23. In the embodiment, insulated connection between the electrode terminal 24 and the end cap 23 is achieved by providing the second insulating part 252. The first insulating part 251 and the second insulating part 252 may be independent from each other, so there is no connection relationship therebetween. The first insulating part 251 and the second insulating part 252 may be interconnected to form an entirety. Exemplarily, the second insulating part 252 is configured to seal the electrode terminal 24 and the end cap 23. The second insulating part 252 not only achieves insulated connection between electrode terminal 24 and end cap 23, but also achieves sealed connection between electrode terminal 24 and end cap 23.

In the embodiment, the first insulating part 251 of the insulating member 25 serves to separate the first tab 222 from the second tab 223, while the second insulating part 252 of the insulating member 25 serves to separate the electrode terminal 24 and the end cap 23. In other words, the insulating member 25 not only serves to separate the first tab 222 from the second tab 223, but also to separate the electrode terminal 24 and the end cap 23. The insulating member 25 not only achieves insulation between the first tab 222 and the second tab 223, but also achieves insulation between the electrode terminal 24 and the end cap 23.

Both the first insulating part 251 and the second insulating part 252 may be ring structures extending along a circumference of the electrode terminal 24, so that the insulating member 25 is arranged around the electrode terminal 24. In a case where the first insulating part 251 and the second insulating part 252 are interconnected, the insulating member 25 can also separate the second tab 223 and the end cap 23, reducing risks of short circuit of positive and negative poles caused by contact between the second tab 223 and the end cap 23.

In some embodiments, the first insulating part 251 and the second insulating part 252 may be formed as an integrally formed structure.

It should be understood that the first insulating part 251 and the second insulating part 252 are formed as a whole through integrated molding, such as pouring molding.

In the embodiment, the insulating member 25 has good integrity and is easy to install. Since the electrode terminal 24 and the end cap 23 are in insulated connection through the second insulating part 252, the second insulating part 252 is jointly limited by the electrode terminal 24 and the end cap 23, and in this case, the first insulating part 251 is not easily displaced within the housing 21, so that the first insulating part 251 always remains in a position that separates the first tab 222 and the second tab 223.

In some embodiments, the battery cell 20 includes a housing 21, an electrode assembly 22, an end cap 23, and an electrode terminal 24. The housing 21 has an opening. The electrode assembly 22 is housed within the housing 21, and the electrode assembly 22 includes a main body 221, a first tab 222, and a second tab 223. The first tab 222 and the second tab 223 have opposite polarities and are located at a same end of the main body 221. The end cap 23 is provided for covering the opening and is electrically connected to the first tab 222. The electrode terminal 24 is in insulated connection with the end cap 23. The electrode terminal 24 includes a first concave part 241, which is concaved from a side of the electrode terminal 24 away from the main body 221 towards a side of the electrode terminal 24 nearer the main body 221. The electrode terminal 24 includes a first connecting part 242. In the thickness direction Z of the end cap 23, the first connecting part 242 is located between the first concave part 241 and the second tab 223, and the first connecting part 242 is provided for connecting the second tab 223 to achieve electrical connection between the electrode terminal 24 and the second tab 223.

The first concave part 241 of the electrode terminal 24 may be a groove that is which is concaved from a side of the electrode terminal 24 away from the main body 221 towards a side of the electrode terminal 24 nearer the main body 221. The depth direction of the first concave part 241 is consistent with the thickness direction Z of the end cap 23. The first concave part 241 may be a straight groove structure with its dimensions perpendicular to the depth direction unchanged along the depth direction, for example, the first concave part 241 may be a cylindrical groove; the first concave part 241 may be a stepped structure with its dimensions perpendicular to the depth direction gradually decreasing along the depth direction, for example, the first concave part 241 may be a stepped groove with a larger upper part and a smaller lower part.

The first connecting part 242 is a part where the electrode terminal 24 is connected to the second tab 223. The part of the electrode terminal 24 which is located at bottom of the first concave part 241 is the first connecting part 242. It should also be understood that after the electrode terminal 24 is provided with the first concave part 241, a remaining part of the electrode terminal 24 than the part corresponding to the first concave part 241 is the first connecting part 242.

In the embodiments of the present application, the electrode terminal 24 is provided with the first concave part 241, and the first connecting part 242 between the first concave part 241 and the second tab 223 is connected to the second tab 223, to achieve electrical connection between the electrode terminal 24 and the first tab 222. Since the second tab 223 is electrically connected with the end cap 23 and the second tab 223 and the first tab 222 are located at the same end of the main body 221, it achieves tabs leading out from the same end of the main body 221, which saves an inner space of the battery cell 20 so that the housing 21 can provide more space for the main body 221, and thus is beneficial for improving energy density of the battery cell 20.

In addition, the electrode terminal 24 includes the first connecting part 242 which is located between the first concave part 241 and the second tab 223 and the part of the electrode terminal 24 which is located at bottom of the first concave part 241 serves as first connecting part 242. Through the first concave part 241, an area where the electrode terminal 24 is connected to the second tab 223 can be determined, facilitating accurate connection of the electrode terminal 24 to the second tab 223.

In some embodiments, the electrode terminal 24 includes an abutting surface 243 which faces the main body 221 in the thickness direction Z of the end cap 23, and the abutting surface 243 is abutted against the second tab 223. The first connecting part 242 of the electrode terminal 24 is formed between a bottom surface 2411 of the first concave part 241 and the abutting surface 243.

The abutting surface 243 is a surface of the electrode terminal 24, via which the electrode terminal 24faces the main body 221 in the thickness direction Z of the end cap 23 and is abutted against the second tab 223. The abutting surface 243 may be a surface of an end of the electrode terminal 24 facing the main body 221, and the abutting surface 243 is abutted against an end of the second tab 223 away from the main body 221. The abutting surface 243 being abutted against the second tab 223 refers to the abutting surface 243 is in contact with the second tab 223. The electrical connection between the first connecting part 242 and the second tab 223 may be achieved by the abutting surface 243 being abutted against the second tab 223, or the first connecting part 242 and the second tab 223 may be fixed together under abutting of the abutting surface 243 against the second tab 223. For example, the first connecting part 242 is welded to the second tab 223.

The bottom surface 2411 of the first concave part 241 refers to a surface of the first concave part 241 closest to the main body 221 in the thickness direction Z of the end cap 23. The first connecting part 242 is the part of the electrode terminal 24 between the abutting surface 243 and the bottom surface 2411 of the first concave part 241. The abutting surface 243 and the bottom surface 2411 of the first concave part 241 are two surfaces of the first connecting part 242 in the thickness direction Z of the end cap 23, respectively.

In the embodiment, the abutting surface 243 of the electrode terminal 24 is abutted against the second tab 223. On the one hand, it can ensure a large overcurrent area between the electrode terminal 24 and the second tab 223, and on the other hand, it allows the electrode terminal 24 to be directly connected to the second tab 223 without a current collector for facilitating electrical connection between the electrode terminal 24 and the second tab 223, which can free up more space for the main body 221, and thus is beneficial for improving energy density of battery cell 20.

In some embodiments, the end cap 23 includes an inner surface 231 facing the main body 221 in the thickness direction Z of the end cap 23, and the abutting surface 243 is flush with the inner surface 231.

The inner surface 231 is a surface of the end cap 23 facing the main body 221 in the thickness direction Z and closest to the main body 221. The abutting surface 243 being flush with the inner surface 231 indicates that the abutting surface 243 is coplanar with the inner surface 231.

In the embodiment, the abutting surface 243 of the electrode terminal 24 is flush with the inner surface 231 of the end cap 23, reducing ta space occupied by the electrode terminal 24 in the housing 21 and freeing up more space for the main body 221, which is beneficial for improving energy density of the battery cell 20.

In some other embodiments, it may be that the abutting surface 243 is closer to the main body 221 in the thickness direction Z of the end cap 23 than the inner surface 231, or that the abutting surface 243 is further away from the main body 221 in the thickness direction Z of the end cap 23 than the inner surface 231.

In some embodiments, the first connecting part 242 is provided with a liquid injection hole 244, which connects the first concave part 241 and an interior of the housing 21.

The liquid injection hole 244 is a liquid injection channel for injecting electrolyte into the interior of the housing 21. The liquid injection hole 244 runs through the bottom surface 2411 of the first concave part 241 and the abutting surface 243 of the electrode terminal 24, thereby connecting the first concave part 241 with the interior of the housing 21. The liquid injection hole 244 occupies a portion of the bottom surface 2411 of the first concave part 241. Exemplarily, the liquid injection hole 244 is located at the center of the bottom surface 2411 of the first concave part 241, and the liquid injection hole 244 is disposed corresponding to a center hole of the electrode assembly 22. The liquid injection hole 244 may have various shapes, such as circular, square, etc.

Electrolyte can be injected into the interior of the housing 21 through the liquid injection hole 244, without the need to set the liquid injection hole 244 on the end cap 23, which enhances the strength of the end cap 23. In addition, the first connecting part 242 is formed by providing the first concave part 241 in the electrode terminal 24, so the first connecting part 242 has a smaller thickness, which makes it more convenient to arrange the liquid injection hole 244.

In some embodiments, the electrode terminal 24 includes a terminal body 245 and a limiting structure. The first connecting part 242 is formed by the terminal body 245. The limiting structure is set on the terminal body 245, to limit movement of the terminal body 245 relative to the end cap 23 in the thickness direction Z of the end cap 23.

The terminal body 245 is a body part of the electrode terminal 24, and the first connecting part 242 is a part of the terminal body 245. The terminal body 245 may be cuboid, cylinder, etc. The limiting structure is a part of the electrode terminal 24 which limits movement of the terminal body 245 along the thickness direction Z of the end cap 23 in combination with the end cap 23.

The limiting structure plays a limiting role on the terminal body 245 to limit movement of the terminal body 245 relative to the end cap 23 in the thickness direction Z of the end cap 23, which improves firmness of connection of the electrode terminal 24 with the end cap 23, to ensure stability of electrical connection between the first connecting part 242 and the second tab 223, and reduce risks of failure of electrical connection between the first connecting part 242 and the second tab 223 caused by movement of the electrode terminal 24 relative to the end cap 23.

In some embodiments, the limiting structure may include a first limiting part 246 and a second limiting part 247, both of which protrude from an outer surface of the terminal body 245. The end cap 23 include a stop part 232, and the stop part is provided with a through hole. The terminal body 245 passes through the through hole, and in the thickness direction Z of the end cap 23, the first limiting part 246 and the second limiting part 247 are respectively located on both sides of the stop part 232 to limit movement of the terminal body 245 relative to the stop part 232 in the thickness direction Z.

The first limiting part 246 and the second limiting part 247 are parts of the electrode terminal 24 for limiting the terminal body 245 in combination of and the end cap 23. The stop part 232 is a part of the end cap 23 which is located between the first limiting part 246 and the second limiting part 247 in the thickness direction Z. Taking the first limiting part 246 being located at a side of the stop part 232 away from the main body 221 and the second limiting part 247 being located at a side of the stop part 232 facing the main body 221 as an example, in the thickness direction Z of the end cap 23, the first limiting part 246 is provided for limiting movement of the terminal body 245 relative to the stop part 232 towards a direction close to the main body 221, and the second limiting part 247 is provided for limiting movement of the terminal body 245 relative to the stop part 232 towards a direction away from the main body 221. The first limiting part 246 and the second limiting part 247 can both directly abutted against the stop part 232, or indirectly abutted against the stop part 232 through a middleware, so as to limit movement of the terminal body 245 relative to the stop part 232 in the thickness direction Z.

The first limiting part 246, the terminal body 245, and second limiting part 247 jointly define a limiting groove, and the stop part 232 is clamped in the limiting groove, thereby achieving limiting of the electrode terminal 24. Taking the terminal body 245 being a cylinder as an example, the first limiting part 246 and the second limiting part 247 may be ring structures extending along a circumference of the terminal body 245. The first limiting part 246, the terminal body 245, and the second limiting part 247 jointly define a circular limiting groove.

The first limiting part 246 and the terminal body 245 may be an integrally formed structure, or may be separate structures which are then connected together. The second limiting part 247 and the terminal body 245 may be an integrally formed structure or may be separate structures which are then connected together. Depending on a different structure of electrode terminal 24, a different method may be chosen to install the electrode terminal 24 with the end cap 23. For example, in a case where the first limiting part 246 and the terminal body 245 are separately formed, while the second limiting part 247 and the terminal body 245 are integrally formed, when installing the electrode terminal 24, the terminal body 245 can be first threaded into the through hole of the stop part 232, and then the second limiting part 247 is connected (such as welded) to the terminal body 245, thereby installing the electrode terminal 24 on the end cap 23; for another example, in a case where both the first limiting part 246 and the second limiting part 247 are integrally formed with the terminal body 245, the electrode terminal 24 can be installed on the end cap 23 by riveting.

The outer surface of terminal body 245 refers to an outer surface of the terminal body 245 which is parallel to the thickness direction Z of end cap 23. Taking the terminal body 245 being a cylinder as an example, the outer surface of terminal body 245 is a cylindrical outer surface of terminal body 245.

In the embodiment, the terminal body 245 is passed through the through hole of the stop part 232. and the first limiting part 267 and second limiting part 247 are located at both sides of the stop part 232, respectively, not only movement of the terminal body 245 in an axial direction (the thickness direction Z of the end cap 23) is limited, but also movement of the terminal body 245 in a radial direction is also limited, achieving limiting of the electrode terminal 24 to ensure stability of electrical connection between the first connecting part242 of the electrode terminal 24 and the tabs.

It should be noted that in the embodiments of the present application, the limiting structure in the electrode terminal 24 is not limited to the above structure. For example, the limiting structure may include a protruding part protruding from the outer surface of the terminal body 245, and the protruding part cooperates with a slot on a hole wall of the through hole on the stop part 232 to achieve the purpose of limiting movement of the terminal body 245 along the thickness direction Z of the end cap 23.

In some embodiments, the second insulating part 252 can be folded around the stop part 232 of the end cap 23, so the stop part 232 has a good limiting effect on the second insulating part 252, to limit movement of the second insulating part 252 in the thickness direction Z of the end cap 23. For example, in Fig. 6, in the thickness direction Z of the end cap 23, a part of the second insulating part 252 is located between the first limiting part 246 and the stop part 232; in the thickness direction Z of the end cap 23, a part of the second insulating part 252 is located between the second limiting part 247 and the stop part 232; and a part of the insulating member 25 is located between the hole wall of the through hole of the stop part 232 and the outer surface of the terminal body 245, so as to achieve good insulation and sealing of the electrode terminal 24 and the end cap 23. In addition, for exemplarily, in the thickness direction Z of the end cap 23, the second limiting part 247 is closer to the main body 221 than the first limiting part 246, and a part of the second insulating part 252 wraps the outer surface of the first limiting part 246, which further improves insulation between the electrode terminal 24 and the end cap 23.

In some embodiments, the end cap 23 is provided with a second concave part 233, which is concaved from a side of the end cap 23 away from the main body 221 towards a direction near to the main body 221. The end cap 23 includes a second connecting part 234, which is located between the second concave part 233 and the first tab 222 in the thickness direction Z of the end cap 23. The second connecting part 234 is provided for connecting the first tab 222.

The second concave part 233 of the end cap 23 may be a groove that is concaved from the side of the end cap 23 away from the main body 221 towards a direction near to the main body 221, and the depth direction of the second concave part 233 is consistent with the thickness direction Z of the end cap 23. There may one second concave part 233 on the end cap 23, for example, the second concave part 233 may be a circular groove around the electrode terminal 24; There may be a plurality of second concave part 233 on the end cap 23, for example, the plurality of second concave parts 233 may be spaced along a circumferential of the electrode terminal 24.

The second connecting part 234 is a part of the end cap 23 where the end cap 23 is connected to the first tab 222, and the part of the end cap 23 which is located at bottom of the second concave part 233 is the second connecting part 234. It should also be understood that after providing the second concave part 233 on the end cap 23, a remaining part of the end cap 23 other than the part corresponding to the second concave part 233 is the second connecting part 234.

The end cap 23 includes the second connecting part 234 which is located between the second concave part 233 and the first tab 222, and connects to the first tab 222. The part of the end cap 23 at the bottom of the second concave part 233 serves as the second connecting part 234. With the second concave part 233, an area where the end cap 23 is connected to the first tab 222 can be determined, facilitating accurate connection of the end cap 23 to the first tab 222.

In some embodiments, the first connecting part 242 is welded to the second tab 223. Exemplarily, the first connecting part 242 may be welded to the second tab 223 through penetration welding.

The first connecting part 242 is welded to the second tab 223, ensuring stable connection between the electrode terminal 24 and the first tab 222, and ensuring stable overcurrent between the electrode terminal 24 and the second tab 223. Further, the electrode terminal 24 is directly connected to the second tab 223, so there is no need to set a current collector between the electrode terminal 24 and the second tab 223 to achieve their electrical connection, which can free up more space for the main body 221.

Since the electrode terminal 24 is provided with the first concave part 241, such that thickness of the first connecting part 242 of the electrode terminal 24 that is provided for welding with the second tab 223 is relatively small compared to thickness of other parts of the electrode terminal 24, which facilitates welding of the first connecting part 242 to the second tab 223 through penetration welding, ensuring firmness of welding of the electrode terminal 24 with the second tab 223. In addition, a part of welding marks formed by the welding between the first connecting part 242 and the second tab 223 which protrudes from the first connecting part 242 can be accommodated in the first concave part 241, avoiding an influence of the welding mark on connection between the electrode terminal 24 and an external component (such as a busbar component).

In the embodiment where the end cap 23 is provided with the second concave part 233, thickness of the second connecting part 234 of the end cap 23 which is provided for welding with the first tab 222 is relatively small compared to thickness of other parts of the end cap 23, which facilitates welding of the second connecting part 234 to the first tab 222 through penetration welding, ensuring firmness of welding of the end cap 23with the first tab 222. In addition, a part of welding marks formed by the welding between the second connecting part 234 and the first tab 222 can be accommodated in the first concave part 241, avoiding an impact of the welding mark on the connection between the end cap 23 and an external component (such as confluence busbar component).

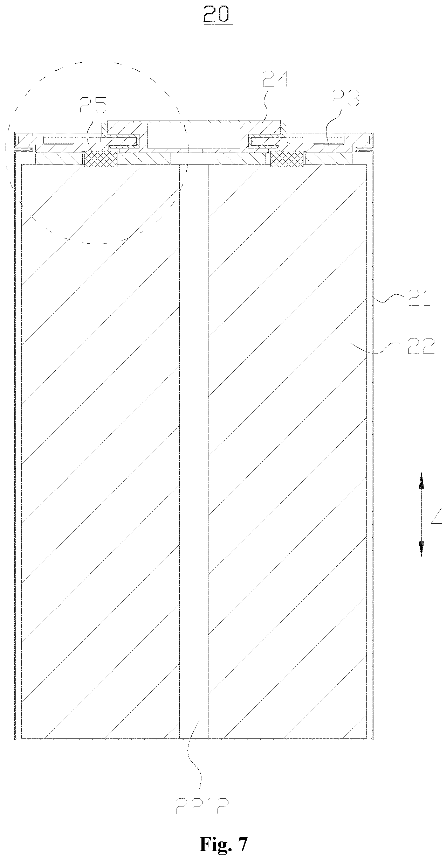

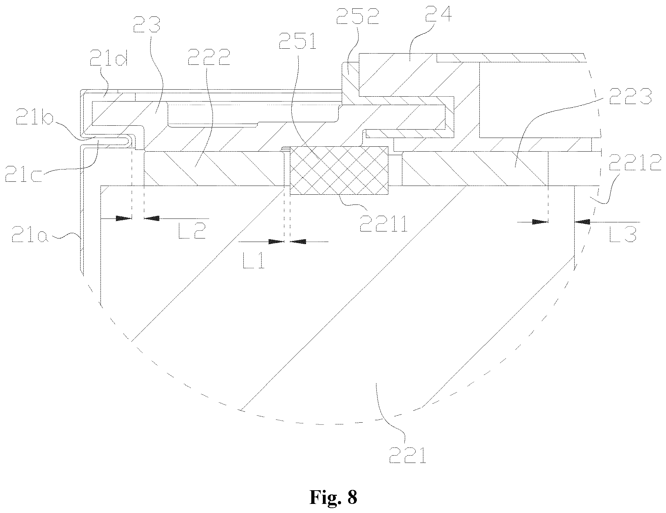

Fig. 7 is a cross-sectional schematic diagram of a battery cell according to another embodiment of the present application; and Fig. 8 is an enlarged schematic diagram of the battery cell shown in Fig. 7, as indicated by the circle B.

As shown in Figs. 7 and 8, in some embodiments, the insulating member 25 abuts against the main body 221 to form a concave structure 2211 on a surface of the main body 221 facing the end cap 23.

The surface of the main body 221 facing the end cap 23 is formed by winding one end of the isolation film facing the end cap 23. The isolation membrane is a flexible membrane that is prone to deformation when subjected to a force. The embodiment can adopt an interference design to deform the isolation film under pressure from the insulating member 25 to form the concave structure 2211. With formation of the concave structure 2211, a compressed area of the isolation film becomes tight, such that a distance between the insulating member 25 and the electrode pieces become closer, which reduces a degree of further compression of the isolation film under pressure from the insulating member 25 when the battery cell 20 vibrate, thereby reducing an amplitude of vibration of the electrode assembly 22.

In the present embodiment, the insulating member 25 can insulate an area of the first tab 222 covered by the isolation film and an area of the second tab 223 covered by the isolation film, thereby further reducing risks of overlap between the first tab 222 and the second tab 223 due to burrs, deformation, or other reasons, and improving safety.

Exemplarily, the first insulating part 251 is abutted against the main body 221 to form the concave structure 2211.

In some embodiments, the concave structure 2211 may have a depth of 0.01mm-5mm.

Exemplarily, the depth of the concave structure 2211 may be 0.01mm, 0.05mm, 0.1mm, 0.5mm, 1mm, 3mm, or 5mm.

The depth of the concave structure 2211 refers to a size of the concave structure 2211 in the thickness direction Z.

The greater the depth of the concave structure 2211, the smaller the distance between the insulating member 25 and the electrode pieces, the smaller the buffering effect of the isolation film when the battery cell vibrates, the greater the force on the electrode pieces, resulting in higher risks of active materials on the electrode pieces falling off; the smaller the depth of the concave structure 2211, the greater the degree to which the isolation film can be compressed during the vibration of the battery cell 20, and the greater the amplitude of vibration of the main body 221, resulting in higher risks of tearing of tabs. The inventor has conducted experiments to found that the depth of the concave structure 2211 being limited within 0.01mm to 5mm can effectively balance pressure on the electrode pieces and the amplitude of vibration of the main body 221, thereby improving usability and safety of the electrode assembly.

In some embodiments, the depth of the concave structure 2211 may be 0.5mm to 3mm.

In some embodiments, in a radial direction of the main body 221, a maximum distance between a part of the insulating member 25 which is located between the first tab 222 and the second tab 223 and the first tab 222 is less than or equal to 5mm.

During assembly and usage of the battery cell, the first tab 222 may deform when compressed, leading to risks of the first tab 222 being inserted into the main body 221. In the embodiment, the distance between the part of the insulating member 25 which is located between the first tab 222 and second tab 223 and the first tab 222 is relatively small, so the insulating member 25 can effectively support the first tab 222, which reduces a degree of deformation of the first tab 222, and reduces risks of the first tab 222 being inserted into the main body 221, thereby improve safety.

In some embodiments, the first insulating part 251 is at least partially located between the first tab 222 and the second tab 223. In a radial direction of the main body 221, a distance L1 between a part of the first insulating part 251 which is located between the first tab 222 and the second tab 223 and the first tab 222 may be 0.1mm to 5mm, and for example, L1 may be 1mm to 3mm.

In some embodiments, in the radial direction of the main body 221, a maximum distance between the part of the first insulating part 251 which is located between the first tab 222 and the second tab 223 and the second tab 223 is less than or equal to 5mm.

In some embodiments, the part of the insulating member 25 which is located between the first tab 222 and the second tab 223 is abutted against the first tab 222 to support the first tab 222.

Exemplarily, the first insulating part 251 is abutted against the first tab 222 in the radial direction of the main body 221.

In the embodiment, the insulating member 25 is abutted against the first tab 222 to effectively support the first tab 222, which reduces a degree of deformation of the first tab 222, and reduces risks of the first tab 222 being inserted into the main body 221, thereby improve safety.

In some embodiments, the part of the insulating member 25 which is located between the first tab 222 and the second tab 223 is abutted against the second tab 223 to support the second tab 223.

In some embodiments, the housing 21 may include a housing body 21a and a support part 21b protruding from an inner surface of the housing body 21a, wherein the support part 21b is provided at a side of the end cap 23 facing the electrode assembly 22 and for supporting the end cap 23. In the thickness direction Z of the end cap 23, the support part 21b and the main body 221 are spaced apart, and the support part 21b and the first tab 222 do not overlap.

A projection of the support part 21b on a plane perpendicular to the thickness direction Z does not overlap with a protection of the first tab 222 on the same plane.

In this embodiment, the support part 21b can limit the end cap 23 in the thickness direction Z to avoid excessive insertion of the end cap 23 into the housing 21. The support part 21b does not overlap with the first tab 222 in the thickness direction Z, which can avoid interference between the support part 21b and the first tab 222, prevents the support part 21b from squeezing the first tab 222, thereby reducing deformation of the first tab 222.

In some embodiments, the housing 21 may include a third concave part 21c corresponding to the support part 21b, which is concaved from an inner surface of the housing body 21a. Exemplarily, the third concave part 21c and the support part 21b may be formed by rolling-in the housing 21 from outside.

In some embodiments, the housing 21 may further include a flanging part 21d which is connected to an end of the housing body 21a, and the flanging part 21d is located at a side of the end cap 23 away from the support part 21b. The support part 21b and the flanging part 21d grip a part of the end cap 23 from both sides to secure the end cap 23 to the housing 21.

In some embodiments, the support part 21b and the second tab 223 do not overlap in the thickness direction Z. Exemplarily, the first tab 222 surrounds the outer side of the second tab 223, and in the radial direction of the main body 221, the first tab 222 is closer to the support part 21b than the second tab 223.

In some embodiments, in the radial direction of the main body 221, a minimum distance between the first tab 222 and a top end of the support part 21b is greater than or equal to 0.1mm.

The embodiment can reduce risks of contact between the first tab 222 and the support part 21b due to assembly errors.

In some embodiments, in the radial direction of the main body 221, a maximum distance between the first tab 222 and the top end of the support part 21b may be less than or equal to 5mm.

The larger the distance between the first tab 222 and the top end of the support part 21b, the smaller the radial size of the first tab 222, and the lower the overcurrent capacity of the first tab 222. The embodiment ensures overcurrent capacity of the first tab 222 by making the maximum distance between the first tab 222 and the top end of the support part 21b to be less than or equal to 5mm.

In some embodiments, in the radial direction of the main body 221, the distance between the first tab 222 and the top end of the support part 21b is L2, and a value of L2 may be 0.1mm to 5mm. Optionally, the value of L2 may be 0.3mm 3mm.

In some embodiments, the main body 221 may be a wound structure, and the main body 221 has a central hole 2212 at a center of the wound center. In the radial direction of the main body 221, a minimum distance between the second tab 223 and the center hole 2212 may be greater than or equal to 0.1mm.

In this embodiment, the central hole 2212 can serve as a channel for flowing of electrolyte, which can improve wettability of the electrode assembly 22; when gas is generated inside the battery cell 20 due to thermal runaway, the central hole 2212 can also serve as a channel for flowing of the gas, allowing the gas to be quickly discharged through a pressure relief mechanism of the battery cell 20, which reduces safety risks The embodiment can ensure a minimum distance between the second tab 223 and the center hole 2212, which can reduce risks of the second tab 223 obstructing the center hole 2212 due to deformation.

In some embodiments, in the radial direction of the main body 221, a maximum distance between the second tab 223 and the central hole 2212 may be less than or equal to 5mm.

The larger the distance between the second tab 223 and the center hole 2212, the smaller the radial size of the second tab 223, and the lower the overcurrent capacity of the second tab 223. The embodiment ensures overcurrent capacity of the first tab 222 by making the maximum distance between the second tab 223 and the center hole 2212 to be less than or equal to 5mm.

In some embodiments, in the radial direction of the main body 221, the distance between the second tab 223 and the central hole 2212 is L3, and a value of L3 may be 0.1mm to 5mm. Exemplarily, the value of L3 may be 1mm to 5mm.

In some embodiments, a minimum distance between the first tab 222 and the center hole 2212 may be greater than or equal to 0.1mm in the radial direction of the main body 221. Exemplarily, the first tab 222 surrounds the outer side of the second tab 223, and the second tab 223 is closer to the central hole 2212 than the first tab 222.

In some embodiments, the first insulating part 251 and the second insulating part 252 are independent from each other, and there is no connection relationship thererbetween. The end cap 23 and the main body 221 clamp the first insulating part 251 to achieve fixation of the first insulating part 251.

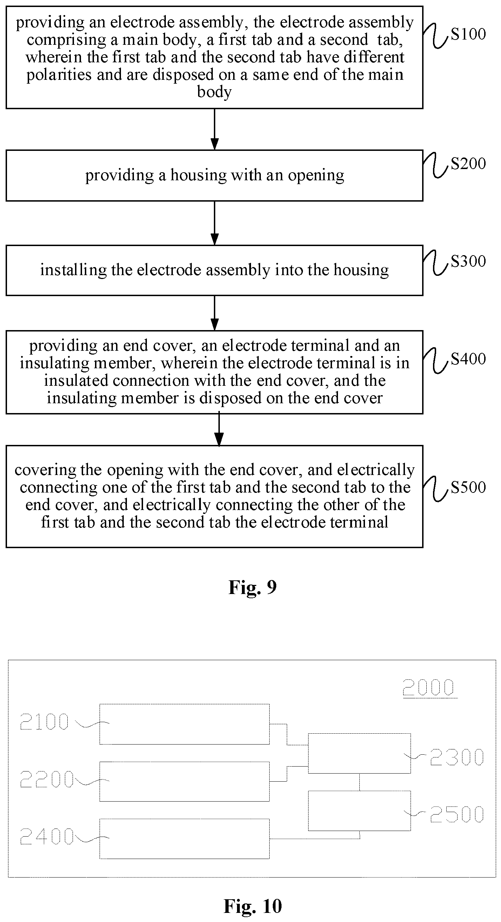

Fig. 9 is a flowchart illustrating a method for manufacturing a battery cell according to some embodiments of the present application.

As shown in Fig. 9, the method for manufacturing a battery cell according to an embodiment of the present application includes:
S100, providing an electrode assembly, the electrode assembly comprising a main body, a first tab and a second tab, wherein the first tab and the second tab have different polarities and are disposed on a same end of the main body;
S200, providing a housing with an opening;
S300, installing the electrode assembly into the housing;
S400, providing an end cap, an electrode terminal and an insulating member, wherein the electrode terminal is in insulated connection with the end cap, and the insulating member is disposed on the end cap; and
S500, covering the opening with the end cap, and electrically connecting one of the first tab and the second tab to the end cap, and electrically connecting the other of the first tab and the second tab to the electrode terminal;
wherein the first tab and the second tab are disposed on the same end of the main body facing the end cap, and the insulating member is at least partially located between the first tab and the second tab, and abutted against the main body along a thickness direction of the end cap.

It should be noted that relevant structures of a battery cell manufactured through the method for manufacturing a battery cell described above can be found in the description of the battery cell according to the above embodiments.

When manufacturing a battery cell based on the aforementioned method for manufacturing a battery cell, it is not necessary to follow the above steps in sequence. That is to say, the steps may be executed in the order mentioned in the embodiment, may be executed in an order different from the order mentioned in the embodiment, or may be executed simultaneously. For example, the steps S100, S200, and S400 may be executed in any order and may be performed simultaneously.

Fig. 10 is a schematic block diagram of a device for manufacturing a battery cells according to some embodiments of the present application.

As shown in Fig. 10, the device 200 for manufacturing a battery cells in the embodiment of the present application includes a first provision device 2100, a second provision device 2200, a first installation device 2300, a third provision device 2400, and a second installation device 2500.

The first provision device 2100 configured to an electrode assembly, the electrode assembly comprising a main body, a first tab and a second tab, wherein the first tab and the second tab have different polarities and are disposed on a same end of the main body. The second provision device 2200 is configured to provide a housing with an opening. The first installation device 2300 is configured to install the electrode assembly into the housing. The third provision device 2400 is configured to provide an end cap, an electrode terminal and an insulating member, wherein the electrode terminal is in insulated connection with the end cap, and the insulating member is disposed on the end cap. The second installation device 2500 is configured to covering the opening with the end cap, and electrically connecting one of the first tab and the second tab to the end cap, and electrically connecting the other of the first tab and the second tab to the electrode terminal. The first tab and the second tab are disposed on the same end of the main body facing the end cap, and the insulating member is at least partially located between the first tab and the second tab, and abutted against the main body along a thickness direction of the end cap.

Relevant structures of a battery cell manufactured through the device for manufacturing a battery cell described above can be found in the description of the battery cell according to the above embodiments.

It should be noted that in the absence of conflicts, the embodiments and the features in the embodiments in the present application can be combined with each other.

Finally, it should be noted that the above embodiments are only used to illustrate the technical solutions of the present application, not to limit the present application; although the present application has been described in detail with reference to the aforementioned embodiments, those skilled in the art should understand that the technical solutions described in the aforementioned embodiments can me modified or some of the technical features can be replaced with their equivalents, and these modifications or substitutions do not make essence of the corresponding technical solutions deviate from the gist and scope of the technical solutions in the various embodiments of the present application.

## Claims

1. A battery cell, comprising:
a housing with an opening;
an end cap for covering the opening;
an electrode terminal in insulated connection with the end cap;
an electrode assembly housed within the housing and comprising a main body, a first tab and a second tab, wherein the first tab and the second tab have different polarities and are disposed on a same end of the main body facing the end cap, one of the first tab and the second tab is provided for electrically connecting the end cap, and the other of the first tab and the second tab is provided for electrically connecting the electrode terminal; and
an insulating member, at least partially located between the first tab and the second tab, and abutted against the main body along a thickness direction of the end cap.

2. The battery cell according to claim 1, wherein the insulating member is at least partially clamped between the electrode terminal and the end cap.

3. The battery cell according to claim 1 or 2, wherein the insulating member comprises a first insulating part, which is at least partially located between the first tab and the second tab to separate the first tab from the second tab; and
along the thickness direction of the end cap, the first insulating part is abutted against the main body and the end cap.

4. The battery cell according to claim 3, wherein the first insulating part is a ring structure extending along a circumference of the electrode terminal.

5. The battery cell according to claim 3 or 4, wherein the insulating part further comprises a second insulating member, which is at least partially located between the electrode terminal and the end cap to insulate the electrode terminal from the end cap.

6. The battery cell according to claim 5, wherein the first insulating part and the second insulating part are formed as integrally formed structure.

7. The battery cell according to any one of claims 1 to 6, wherein the insulating member is abutted against the main body such that a concave structure is formed in a surface of the main body facing the end cap.

8. The battery cell according to claim 7, wherein the concave structure has a depth of 0.01mm to 5mm.

9. The battery cell according to any one of claims 1 to 8, wherein in a radial direction of the main body, a maximum distance from a part of the insulating member which is located between the first tab and the second tab to the first tab is less than or equal to 5mm.

10. The battery cell according to any one of claims 1 to 9, wherein a part of the insulating member which is located between the first tab and second tab is abutted against the first tab to support the first tab.

11. The battery cell according to any one of claims 1 to 10, wherein the housing comprises a housing body and a support part protruding from an inner surface of the housing body, wherein the support part is provided on a side of the end cap facing the electrode assembly and for supporting the end cap; and
in the thickness direction of the end cap, the support part is spaced apart from the main body, and the support part does not overlap with the first tab.

12. The battery cell according to any one of claims 1 to 11, wherein in a radial direction of the main body, a minimum distance between the first tab and a top end of the support part is greater than or equal to 0.1mm.

13. The battery cell according to any one of claims 1 to 12, wherein the main body is a wound structure, and the main body has a central hole at a center of the wound structure; and
in a radial direction of the main body, a minimum distance between the second tab and the center hole is greater than or equal to 0.1mm.

14. The battery cell according to any one of claims 1 to 13, wherein both the first tab and second tab are ring structures, and the first tab surrounds an outer side of the second tab.

15. The battery cell according to any one of claims 9 to 14, wherein the first tab is provided for electrically connecting the end cap, and the second tab is provided for electrically connecting with the electrode terminal.

16. The battery cell according to any one of claims 1 to 15, wherein the first tab is directly connected to the end cap to achieve electrical connection between the first tab and the end cap.

17. The battery cell according to claim 16, wherein the first tab is welded to the end cap.

18. The battery cell according to any one of claims 1 to 17, wherein the battery cell is a cylinder battery cell.

19. A battery, comprising a plurality of battery cells according to any one of claims 1 to 18.

20. An electrical device, comprising the battery according to claim 19, wherein the battery is provided for providing electrical energy.

21. A method for manufacturing a battery cell, comprising:
providing an electrode assembly, the electrode assembly comprising a main body, a first tab and a second tab, wherein the first tab and the second tab have different polarities and are disposed on a same end of the main body;
providing a housing with an opening;
installing the electrode assembly into the housing;
providing an end cap, an electrode terminal and an insulating member, wherein the electrode terminal is in insulated connection with the end cap, and the insulating member is disposed on the end cap; and
covering the opening with the end cap, and electrically connecting one of the first tab and the second tab to the end cap, and electrically connecting the other of the first tab and the second tab to the electrode terminal;
wherein the first tab and the second tab are disposed on the same end of the main body facing the end cap, and the insulating member is at least partially located between the first tab and the second tab, and abutted against the main body along a thickness direction of the end cap.

22. A device for manufacturing a battery cell, comprising:
a first provision device for providing an electrode assembly, the electrode assembly comprising a main body, a first tab and a second tab, wherein the first tab and the second tab have different polarities and are disposed on a same end of the main body;
a second provision device for providing a housing with an opening;
a first installation device for installing the electrode assembly into the housing;
a third provision device for providing an end cap, an electrode terminal and an insulating member, wherein the electrode terminal is in insulated connection with the end cap, and the insulating member is disposed on the end cap; and
a second installation device for covering the opening with the end cap, and electrically connecting one of the first tab and the second tab to the end cap, and electrically connecting the other of the first tab and the second tab to the electrode terminal,
wherein the first tab and the second tab are disposed on the same end of the main body facing the end cap, and the insulating member is at least partially located between the first tab and the second tab, and abutted against the main body along a thickness direction of the end cap.
